# EUROPÄISCHE PATENTSCHRIFT

(11) **EP 1 601 565 B1**
(45) Veröffentlichungstag und Bekanntmachung des Hinweises auf die Patenterteilung: **14.11.2007**
(21) Anmeldenummer: 04717580.7
(22) Anmeldetag: 05.03.2004
(51) Int. Cl.: B62B 1/06

(54) **HEBEVORRICHTUNG MIT LAUFROLLE**
LIFTING DEVICE PROVIDED WITH A TRACK ROLLER
DISPOSITIF DE LEVAGE COMPORTANT UN GALET DE ROULEMENT

(30) Priorität: 06.03.2003 DE 10309653
(43) Veröffentlichungstag der Anmeldung: 07.12.2005
(73) Patentinhaber: Klein, Eckhard, 67435 Neustadt (DE)
(72) Erfinder: Klein, Eckhard, 67435 Neustadt (DE)
(86) Internationale Anmeldenummer: PCT/EP2004/002250
(87) Internationale Veröffentlichungsnummer: WO 2004/078556

(56) Entgegenhaltungen:
- GB-A- 931 470
- US-A- 659 108
- US-A- 2 745 433
- US-A- 4 893 824

## Beschreibung

Die Hebevorrichtung mit Laufrolle ist vor allem für Transportaufgaben, insbesondere zum Umsetzen von Möbelstücken, aber auch von Kisten, Kartons und anderen festen Teilen, besonders in räumlich begrenzter Umgebung vorgesehen. Gerade im Wohnbereich ergeben sich beim Umsetzen von Möbelstücken, etwa zum Zwecke der Renovierung oder der Reinigung des darunter liegenden Bodens, bei der Fehlersuche an der Hausinstallation hinter den Schränken, bei der Verlegung von Bodenbelägen sowie bei Umzugsarbeiten Probleme mit den dafür zur Verfügung stehenden Geräten. Hierbei spielt oft das hohe Gewicht der Möbelstücke und deren unterschiedliche Gestaltung der Außenmaße und der Bodenfreiheit sowie die Beschaffenheit des Bodens, wie Teppichböden, stoßbildende Bodenbeläge sowie die räumliche Begrenzung und die erforderliche Rücksichtnahme auf empfindliche Möbelteile eine Rolle.

Möbelroller und Hebewerkzeuge zum Anheben von Möbelstücken sind allgemein bekannt.

Mit den Dokumenten, US 659 108 A, US 4 893 824 A sowie mit GB 931 470 A sind fahrbare Hebevorrichtungen offenbart, die mit Holmen, mit einem Lasttragteil, sowie mit einem höhenverschiebbaren Klemmarm ausgestattet sind.

In den überwiegenden Fällen werden mit Laufrollen versehene Plattformen unter die von Hand oder mit Werkzeug angehobenen Möbelstücke geschoben. Weiter gibt es auch mit Laufrollen versehene Hebewerkzeuge, die zum Anheben der Möbelstücke als Hebel gestaltet sind.

Die Nachteile dieser bekannten Transportgeräte bestehen darin, daß die zu transportierenden Möbelstücke direkt von Hand, oder mit einem Zusatzgerät angehoben werden müssen und daß sie unter dem Möbelstück plaziert werden. Da diese bekannten Möbelroller unter dem Möbelstück fixiert werden, sind sie, um die Kippgefahr klein zu halten, in flacher Bauweise ausgeführt sind, so daß solche Möbelroller mit relativ kleinen Rollen ausgerüstet werden. Das bringt weitere Nachteile mit sich, so beim Rollen über Teppiche, kleine Teppichabsätze oder über weichen Unterlagen, wodurch diese kleinrädrigen Möbelroller bei schweren Möbeln oft ganz versagen. Die bisherigen Möbelroller werden unter tiefliegende Möbelböden angebracht und sind als rollende Transportplatten nur durch die Reibungskräfte mit dem Möbelstück fixiert, haben keine Höhenverstellung und sind daher für bestimmte Möbelbauformen nicht zu verwenden.

Die Aufgabe dieser Erfindung besteht darin, dem Benutzer ein einfaches, aber sicheres Gerät zur Verfügung zu stellen, mit dem Möbelstücke mittels eines neuartigen Möbelrollers, der eine Hebevorrichtung beinhaltet, so zu gestalten, daß damit die üblichen Möbelformen, wie auch schwere Möbelstücke, z.B. gefüllte Schränke, über schwierige Wohnungsböden problemlos von einer Person aufgenommen, verfahren und wieder abgesetzt werden können.

Um solche Transportaufgaben zu erfüllen, müssen wesentlich größere Laufrollen als bisher üblich zum Einsatz kommen, nämlich Laufrollen mit einem großen Durchmesser und einer breiten, glatten Lauffläche, deren Ränder stark abgerundet sind, wobei die Laufrollen als Lenkrollen ausgeführt sind. Da sich solche großen, zum einwandfreien Lauf geeignete Rollen, aufgrund ihrer Höhe, zum Unterschieben unter Möbelstücke nicht mehr eignen, mußten neue konstruktive Wege zum Anbringen von Laufrollen außerhalb an Möbelstücke gefunden werden. Desweiteren geht es dabei auch um die Aufgabe, eine solche neue Vorrichtung für die unterschiedlichsten Bauformen von Möbeln, sowie für verschiedene Bauhöhen, für den unterschiedlichen lichten Bodenabstand, für verschiedene geometrische Formen und sowohl für schrankartige Möbelstücke, als auch für Polstermöbel oder auch für schwere Tische zu gestalten. Zur Aufgabe gehört außerdem, daß dafür eine einfache Vorrichtung mit wenigen Zusatzteilen an den Möbelaußenseiten so sicher angebracht werden kann, daß diese Vorrichtung sich beim Transport nicht lösen kann und auch keine Möbelbeschädigungen hervorruft. Durch diese, außerhalb an den Möbelstücken angebrachten, neuen Vorrichtungen, entstehen auf die Laufrollen nach außen gerichtete Kräfte, die diese Vorrichtungen vom Möbelstück abdrücken und die es abzufangen gilt.

Diese Aufgabe löst die Erfindung mit den Merkmalen der Ansprüche 1,7 und 9.

Die aufgrund der neuen Konstruktionsweise auftretenden, vom Unterteil des Möbelstück weggerichteten Kräfte, werden, je nach Bauform des Möbelbodens, mittels verschiedener Gestaltungsformen des Lasttragteils abgefangen, wobei sich das dadurch entstehende Kraftmoment über den Holm zum Möbelstück hin abstützt und der Holm entsprechend lang gestaltet ist und der Holmkopf mit einem weichen Aufsatz versehen ist.

Um an Polstermöbeln mit tiefliegender Anlegefläche für den Holm sowie an weiteren Möbelbauformen, die Hebevorrichtung sicher anzusetzen, gibt es einen am Holm angebrachten, höhenverschieblich, winkelverstellbar und fixierbar gestalteten Klemmarm, der mit einer Verbreiterung versehen ist. Damit kann die Hebevorrichtung mit Laufrolle schraubzwingenartig an unterschiedlich gestalteten Möbelstücken befestigt werden.

Die übliche Gestaltung der Möbelböden ermöglicht verschiedene Befestigungsarten, um die Hebevorrichtung mit Laufrolle an den Außenkanten zu fixieren. So ist das gabelartige Lasttrageteil sowohl zum Hintergreifen umlaufender Sockelleisten, als auch zum Hintergreifen von Möbelfüßen, sowie zur Aufnahme horizontaler Kräfte mittels rutschfester Auflage und / oder mit einem Unterzugband versehen, um zwei gegenüberliegende Vorrichtungen unter dem Möbelstück hindurch miteinander zu verbinden. Zur Aufnahme und zur Verbindung der Hebevorrichtung mit Laufrolle an langen Möbelbeinen ist mittig zwischen den Gabelteilen, eine schwenkbar angebrachte Aufstellfläche für Möbelfüße vorgesehen. Zum Unterfassen von tiefliegenden oder bodenschlüssigen Möbelstücken sind an dem Lasttrageteil angespitzte, polierte Zungen angebracht.

Bei dieser neuen Hebevorrichtung mit Laufrolle ergibt sich ein weiterer Vorteil. Dadurch daß hierbei die Last nur geringfügig über den Boden angehoben werden muß, entsteht beim Aufnehmen eines Möbelstückes keine Kippgefahr.

Die Gabelteile des Lasttragteils sind längenverschieblich ausgeführt, wobei in jeder der beiden Lastgabelführungen mindestens jeweils eine verzahnte Fläche einer ebenso verzahnten Fläche auf dem jeweiligen Lastgabelteil gegenüberliegt, die durch die aufgebrachte Möbellast zusammengedrückt werden und damit den eingestellten Gabelauszug sicher fixieren.

Mit der beschriebenen Hebevorrichtung mit Laufrolle können Möbelstücke sowohl angehoben, als auch fixiert und transportiert werden und bei Bedarf kann die Bodenfreiheit sowie die Klemmkraft nachjustiert werden, wodurch diese neue Vorrichtung eine komfortable Lösung als Möbelroller darstellt und für Handwerker, wie z.B. Bodenverleger, ein wichtiges Werkzeug zum rationellen Verschieben von Möbelstücken ist, wobei die Möbel zum Transport oft auch nicht mehr ausgeräumt werden müssen.

Mit einer einfacheren, etwas kostengünstigeren Variante, bestehend aus den gleichen Bauteilen zum Befestigen an einem Möbelstück und gleicher Laufrolle, jedoch ohne Hubantriebselemente ausgeführt, lassen sich Möbelstücke auch gut transportieren, wobei aber der Bedienaufwand größer wird.

In der Anwendung mit dieser Variante ohne Hubantrieb ergibt sich, daß die beschriebene Hebevorrichtung mit Laufrolle als Hebewerkzeug zum Anheben der Möbel dient, um der ohne Hubantrieb ausgestatteten Varianten (als Tochtervorrichtung) den Weg freizumachen, so daß die als Muttervorrichtung genutzte Hebevorrichtung mit Laufrolle dann als letztes Teil am Möbelstück fixiert wird.

Bei einer weiteren Möglichkeit, bei welcher nur die vereinfachten Varianten, die Tochtervorrichtungen ohne Hubantrieb, an ein zu transportierendes Möbelstück geklemmt werden, kann das Anheben des Möbelstückes mittels eines Fremdwerkzeuges oder von Hand erfolgen. Damit stellt diese vereinfachte Variante ohne Hubantrieb auch eine eigenständige Vorrichtung als Möbelroller dar.

Die Gestaltungsformen von Möbeln sind sehr vielfältig, und insbesondere variiert die Bodenfreiheit erheblich, weshalb mit der Hebevorrichtung auch große Leerhübe ausgeführt werden müssen. Daraus resultieren weitere, nachfolgend beschriebene Gestaltungsvarianten an den Vorrichtungen.

So gibt es eine Ausführung um den Leerhub auszuführen, bei der der gesamte Hubbereich mittels der Antriebskurbel getätigt wird, und die Antriebskurbel mit einem zweiten, dem Drehpunkt der Antriebskurbel näher angebrachten Kurbelgriff versehen ist. Mit diesem inneren Kurbelgriff kann der Nutzer den Leerhub schneller durchfahren und dann bei aufkommender Last, mit dem außenliegenden Kurbelgriff, den Krafthub auszufuhren.

Eine weitere Möglichkeit, den Leerhub auszuführen, besteht darin, daß das Lasftragteil an der Hubmechanik entweder über eine klemmbares, oder mittels Arretierung höhenverschieblich angeordnetes Bauteil anzubringen, so der Leerhub durch Verschieben des Lasttrageteil ausgeführt wird und erst dann ein kurzer Lasthub mittels Hubmechanik erfolgt.

Ebenso ist es möglich, anstatt des Lasttragteils, die Laufrolle höhenverschieblich zu gestalten, so daß die Leerhübe durch die Höhenverschiebung an der Laufrolle ausgeführt werden können.

Die kraftumformende Hubmechanik kann über eine Winde mittels Stahlseil oder Textilband oder als Kettenantrieb oder als Spindelantrieb ausgestaltet sein und von Hand oder motorisch angetrieben werden, wobei das Bedienelement als Kurbel, oder auch als Handhebel ausgeführt sein kann. Ebenso ist auch ein hydraulischer Hubantrieb möglich.

Einfache Ausfuhrungsformen ergeben sich mittels Windenantrieb, wobei im anschließend beschriebenen Beispiel das Seil mit einer leichten Rückzugskraft entgegen des Windenantriebes ausgestattet ist, um das Abspringen eines lockeren Zugmittels ( Seil oder Band ) von der Winde zu verhindern. Alle harten Teile der Hebevorrichtung mit Laufrolle, die das Transportgut beschädigen könnten, sind mit einem entsprechenden Schutzüberzug ausgestattet. Alle Klemmverbindungen an der Hebevorrichtung mit Laufrolle sind mit Riffelungen oder durch andere Maßnahmen so gestaltet, daß bei nomaler Belastung ein Schlupf zwischen den zu klemmenden Teilen nicht auftreten kann.

Die Erfindung wird anhand von Ausführungsbeispielen unter Bezug auf die Zeichnungen beschrieben.

Es zeigen:
**Figur 1** die Hebevorrichtung mit Laufrolle an einem Beispiel in der Seitenansicht
**Figur 2** die Hebevorrichtung mit Laufrolle um 90 Grad gedreht zu Figur 1
**Figur 3** die Draufsicht zu Figur 1
**Figur 4** das gabelartige Lasttragteil
**Figur 5** das gabelartige Lasttragteil um 90 Grad gedreht
**Figur 6** die Verzahnung in den Lastgabelführungen
**Figur 7** die Rücklaufsperre an der Winde
**Figur 8** eine Variante von Figur 1, 2 u. 3, bei der die Hubantriebselemente entfallen
**Figur 9** eine weitere Variante mit Leerhubverstellung durch Verschieben des Lasttragteil
**Figur 10** eine Variante mit Leerhubverstellung mittels verstellbarer Laufrollenstütze
**Figur 11** die im Holm eingebauten Rollenarmaturen
**Figur 12** die Figur 11 um 90 Grad gedreht
**Figur 13** den Unterschiebkeil, zur Aufbewahrung an der Hebevorrichtung befestigt
**Figur 14** den Unterschiebkeil als Einzelteil
**Figur 15** ein Eckentragteil
**Figur 16** die Draufsicht zu Figur 15
**Figur 17** die Seitenansicht zu Figur 16
**Figur 18** das Einsetzen der Eckentragteile an der Hebevorrichtung
**Figur 19** die Seitenansicht zu Figur 18, aber ohne eingesetzte Eckentragteile
**Figur 20** eine Variante des Lasttragteil mit einer Gabelung am Antriebsrohr
**Figur 21** eine Anwendung mit zwei sich gegenüberliegenden Vorrichtungen
**Figur 22** die Draufsicht zu Figur 21
**Figur 23** die Führung des Unterzugbandes mit Bandrolle und Haken
**Figur 24** die Anwendung, wie ein langes Möbelbein auf einem Tragteil aufgesetzt wird
**Figur 25** die Draufsicht zu Figur 24
**Figur 26** eine Anwendung, wobei ein Lasttragteil einen Möbelfuß umschließt
**Figur 27** eine Ausgestaltung mit Spindelantrieb

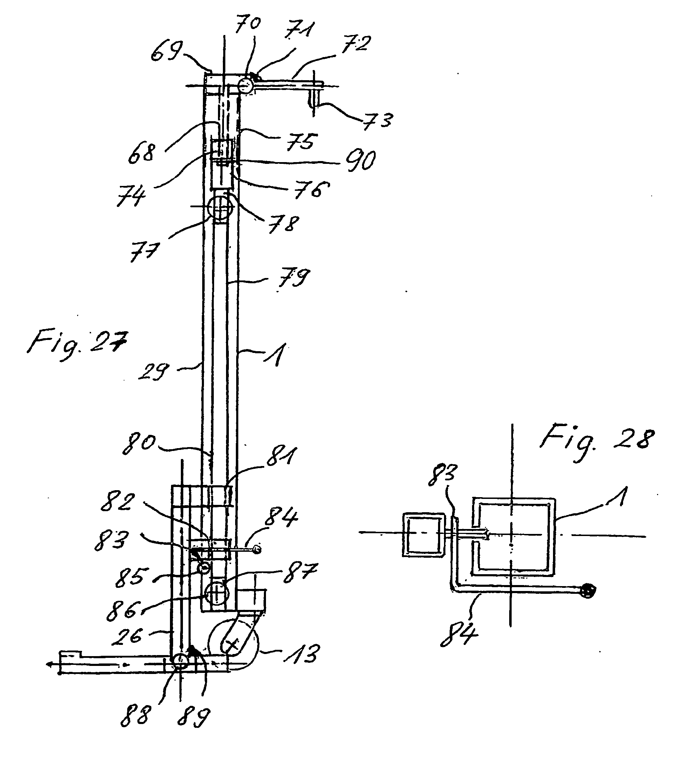

**Figur 28** die Anordnung des Leerhubhebels

Die Hebevorrichtung mit Laufrolle besteht aus einem tragenden Holm (1), an dessen oberen Bereich ein Windenantrieb angebracht ist und an dessen unterem Ende ein gabelartiges Lasthagteil, und auf der dem Holm (1) gegenüberliegenden Seite eine Laufrolle (13) an einer Rollenhalterung (12) befestigt ist. Im dem Bereich zwischen der Kurbel (2) des Windenantrieb und dem Lasttragteil ist am Holm (1) ein höhenverschieblicher, winkelverstellbarer und arretierbarer Klemmarm (7) angebracht.

Der Windenantrieb besteht aus einer im oberen Bereich und innerhalb des Holm (1) gelagerten Welle, die als Winde (5) zum Aufwickeln des als Kraftübemager (50) vorgesehenen Bandes ausgestaltet ist, wobei das eine Bandende an der Verbindungsöse (27) am Antriebrohr (26) und das zweite Ende mit der Winde (5) verbunden ist. Die beidseitig durch die Holmwandung geführte, als Welle gestaltete Winde (5) ist außerhalb des Holm (1), auf der Seite der Laufrolle (13) mit einer Kurbel (2) versehen, wobei die Kurbel (2) mit einem äußeren Kurbelgriff(3) und einem inneren Kurbelgriff (4) ausgestattet ist. Die Winde (5) ist verschiebungssicher gelagert und innerhalb des Holm (1) mit einem Klinkenrad (53), einer Rücklaufsperre (54) und einer nach außen geführten Entriegelung (55) versehen.

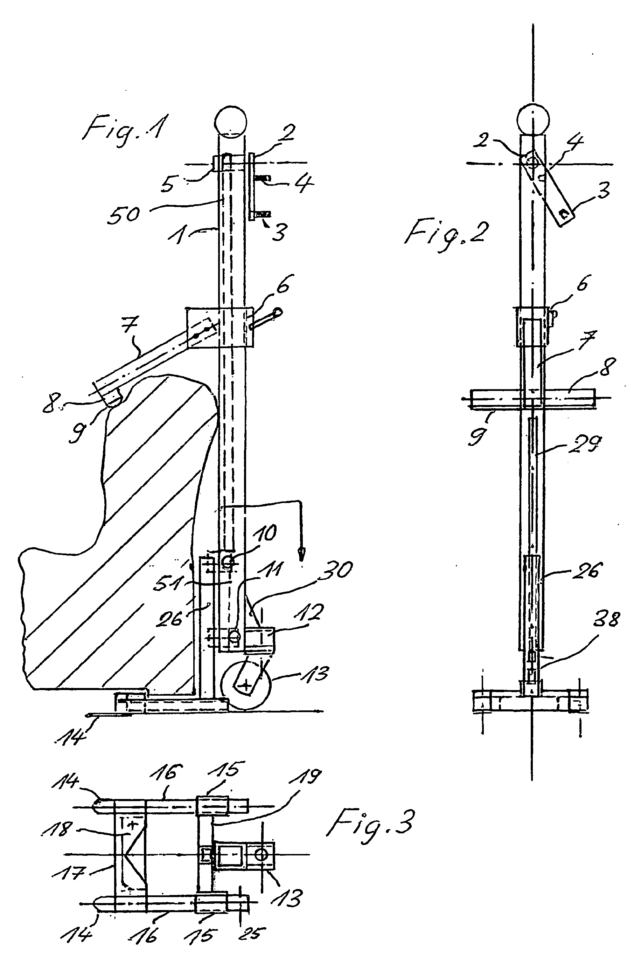

Der Klemmarm (7) ist am Holm (1) mittels Klemmvorrichtung (6) höhenverschieblich, winkelverstellbar und arretierbar angebracht, wobei die nach unten geneigte Stellung des Klemmarms (7) zum Hintergreifen von Möbelstücken (Beispiel Fig. 1) dient.

Der Klemmarm (7) ist an der Klemmvorrichtung (6) drehbar gelagert, wobei das Fixieren der einzelnen Winkelstellungen des Klemmarms (7) mittels eines selbtssichernden, umsteckbaren Steckbolzens durch die entsprechenden Bohrungen an der Klemmvorrichtung (6) und dem Klemmarm (7) erfolgt. An der Unterseite des Klemmarms (7) ist ein mit einer Polsterauflage (9) versehener Querarm (8) angebracht.

In der im Beispiel (nach Fig. 18 und 19) gezeigten Einstellung des Klemmarm (7), bei der der

Klemmarm (7) nach unten geschwenkt und in etwa parallel zum Holm (1) fixiert ist, dient der Klemmarm zur Aufnahme von Eckentragteile zum Anlegen an Möbelecken.

Zur Fixierung der Hebevorrichtung mit Laufrolle an Möbelstücken mit einer ebenen, niedrig liegenden Oberfläche wird der Klemmarm (7) in etwa rechtwinkelig zum Holm (1) eingestellt und fixiert, wobei der Querarm (8) auf dem Möbelstück aufsitzt.

Zum Befestigen der Hebevorrichtung mit Laufrolle an hohen Möbelstücken (z.B. Schränken) kann der Klemmarm (7) in etwa parallel zum Holm (1) nach oben geklappt und fixiert werden, wobei der Querarm (8) mit der Polsterung (9) sich am Möbelstück abstützt. Durch das Verschieben der Klemmvorrichtung (6) zum Holmkopf wird so der Hebelarm der Hebevorrichtung länger und die Flächenpressung am Möbelstück geringer, wozu auch die Verbreiterung durch den Querarm (8) und die Polstetauflage (9) beiträgt. Zum Abstützen über den nach oben geklappten Klemmarm (5) an Möbelecken wird das anhand der Skizzen zu Fig. 15, 16, und 17 beschriebene Eckentragteil in den am Klemmarm (7) vorgesehenen Doppelschlitz (67) eingesetzt.

Hierbei bietet sich zur zusätzlichen Sicherung noch der Umschluß aller am Möbelstück befestigter Hebevorrichtungen mittels eines, in etwa horizontaler Lage angebrachten Zurrbandes.

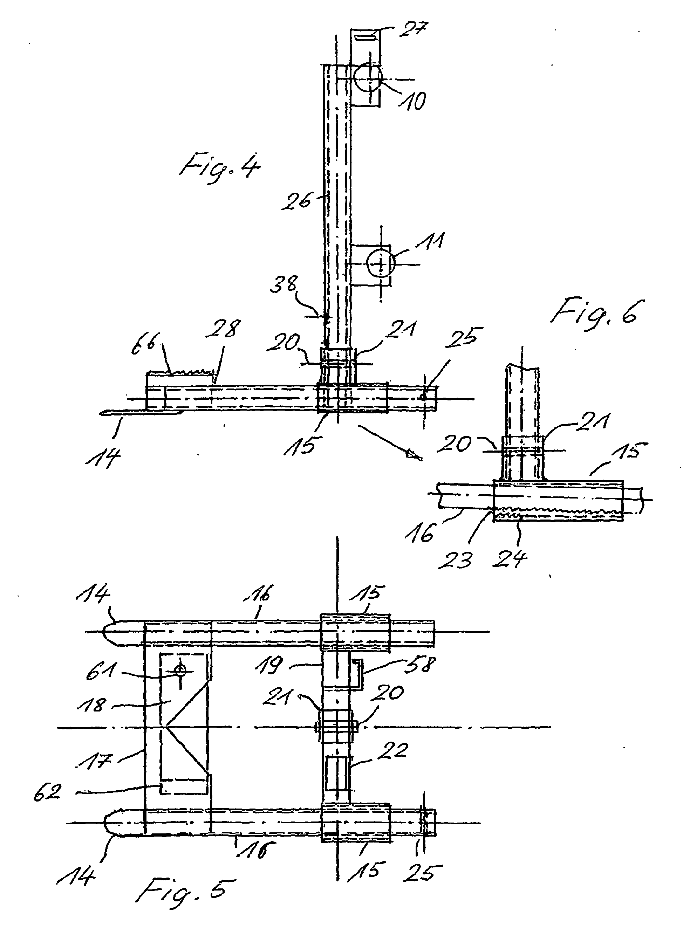

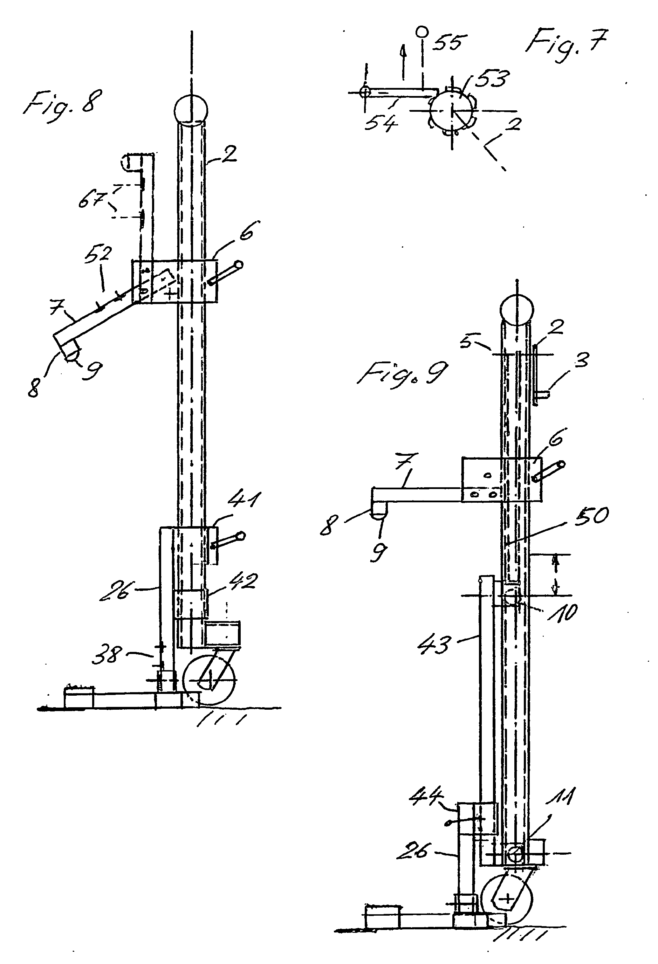

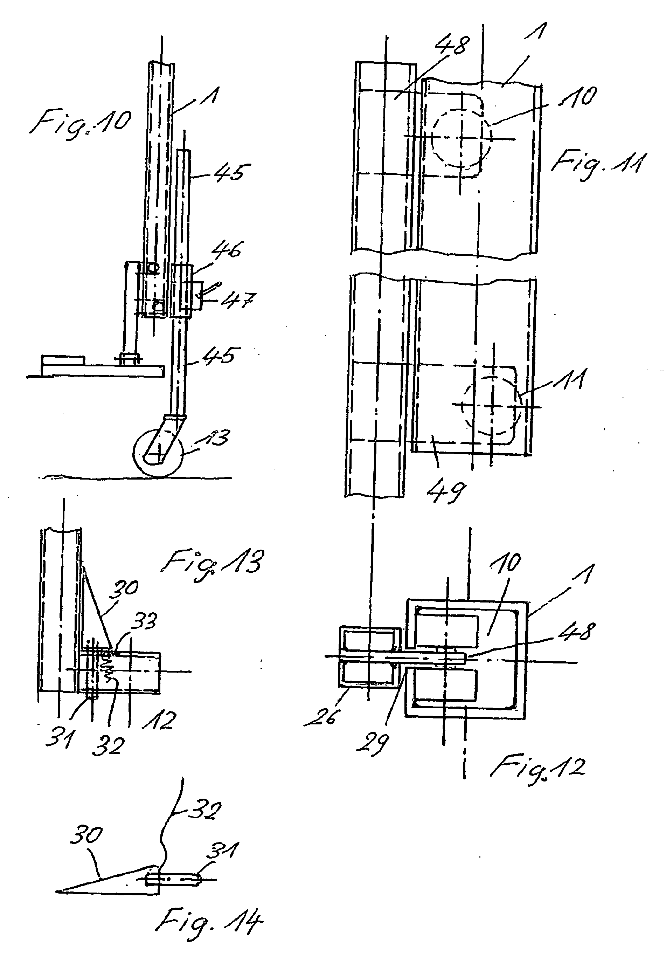

Der Aufbau des gabelförmigen Lasttragteils wird mit den Skizzen von Fig. 4,5 und 6 dargestellt. Das Lasttragteil ist an dem mit Rollenarmaturen (10,11) versehenen Antriebsrohr (26) mittels einer Aufhängung (21) verbunden und mit einem einfach zu lösenden Bolzen (20) gesichert, wobei die aus einem Rechteckrohr bestehende Aufhängung (21) so großräumig zur Aufnahme des Antriebsrohres (26) gestaltet ist, daß ein ausreichender Pendelwinkel um den Bolzen (20) als Drehpunkt entsteht, wodurch sich die Lastgabelteile (16) winkelbeweglich gleichmäßig an den Möbelböden anlegen können.

Die Aufhängung (21) ist mit der die Lastgabelteile (16) tragenden Traverse (19) verbunden und die beiden Enden der Traverse (19) sind mit jeweils einer Lastgabelführung (15) versehen und die Traverse ist mit einer Bandrolle (22) und mit einem Bandbefestigungshaken (58) zum Einhängen einer Bandöse ausgestattet.

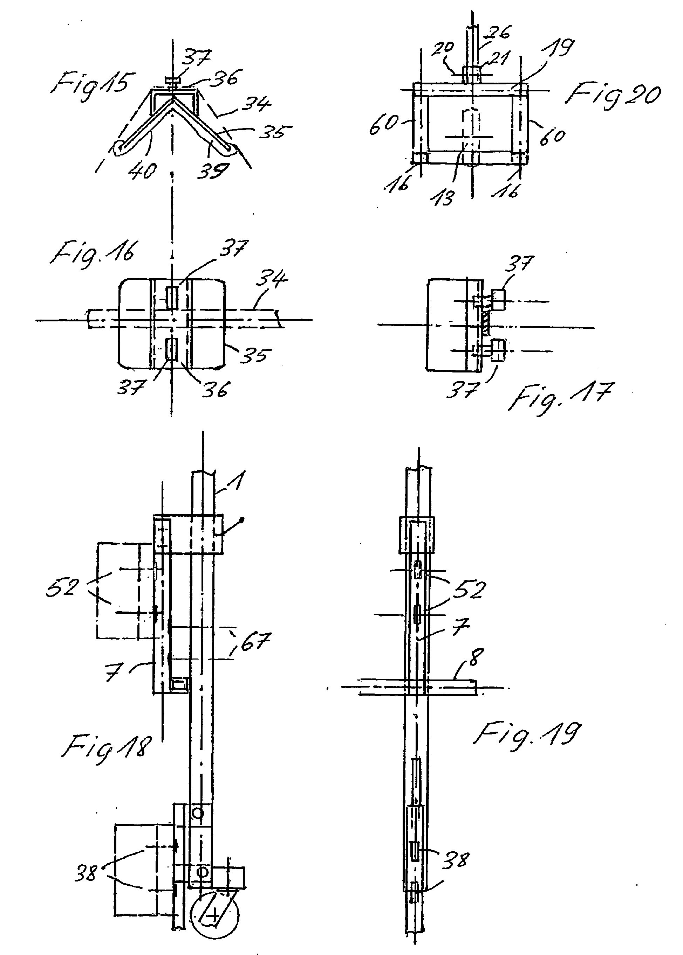

Eine weitere Gestaltungsmöglichkeit zeigt die Skizze nach Fig. 20, wobei die Traverse (19) nicht direkt mit den Lastgabelführungen (15), sondern über eine Gabelung (60) damit verbunden sind.

Das gabelartige Lasttragteil besteht weiter aus zwei aus Rechteckrohren bestehenden Lastgabelteilen (16), die von den Lastgabelführungen (15) aufgenommen werden, wobei die Lastgabelführungen (15) an deren Bodeninnenseite mit einer Verzahnungsauflage (24) und die Lastgabelteile (16) an deren Unterseite mit einer Verzahnungsauflage (23) versehen sind. An dem auf der Seite der Laufrolle (13) liegenden Ende, ist eine der beiden Lastgabelteile (16) mit einer lösbaren Auszugsicherung (25) versehen. Die Abstände der Lastgabelteile (16) zueinander sind so gewählt, daß der Schwenkbereich der Laufrolle (13) in jeder Stellung der Bauteile auch frei bleibt.

Die beiden Lastgabelteile (16) sind mit einem Verbindungsteil (17), das mit einem zur Traverse (19) hin geöffneten v- förmigen Ausschnitt versehen ist, zusammengefügt, wobei die Unterseite des Verbindungsteils (17) mit einer um das Gelenk (61) schwenkbaren und auf einer Auflage (62) ruhenden Aufstellfläche (18) ausgestattet ist. Das Verbindungsteil (17) ist mit einem rutschfesten Belag (66) versehen und dient mit seiner zur Traverse (19) gerichteten Seite als Hintergriff (28) zum Greifen der die Möbelböden umspannenden Bodenleisten, wobei die Bodenleisten dabei auf den Lastgabelteilen (16) aufsitzen.

Das gabelartig ausgestaltete Lasttragteil ist mit einem Zungenpaar (14) versehen, bestehend aus zwei beidseitig, an den Enden der Lastgabelteile (16) und im Anschluß an das Verbindungsteil (17) angebrachten, zum Boden hin abgeflachten und polierte Metallplatten, die zum Unterschieben und Anheben von Möbelstücken mit einer geringen, oder ohne Bodenfreiheit ausgestaltet sind. Dieses Zungenpaar (14) ist in dem gezeigten. Beispiel an den Enden der Lastgabelteile (16) fest angebracht. Es kann aber auch als Variante im Hohlraum der Lastgabelteile (6) eingefügt und ausziehbar und arretierbar gestaltet sein, um so die Gefahr von Möbelbeschädigungen bei anderen Benutzungsarten durch dieses Zungenpaar zu reduzieren.

Das Lasttragteil läßt sich bei gleichem Nutzwert auch anders gestalten, wobei die Lastgabelteile (16) direkt an den beiden Enden der Traverse (19) fest verbunden sind und das Verbindungsteil (17) beidseitig mit je einer die Lastgabelteile (16) umschließenden Führung versehen ist und sowohl diese Führungen, als auch die Lastgabelteile (16) mit einer Verzahnungsauflage versehen sind und daß das Verbindungsteil (17) zum Verschieben leicht angehoben werden muß und daß es auf der Seite des Zungenpaares (14) ausgezogen werden kann, wobei das Zungenpaar (14) innerhalb der Rohrbereiches der Lastgabelteile (16), und in deren Verlängerung überstehend, befestigt ist.

Zum Abstützen eines mittels des Zungenpaares (14) angehobenen Möbelstückes ist ein Unterschiebekeil (30) vorgesehen, der aus einem keilförmigen Körper, dessen Kanten abgerundet sind und der aus einem halbweichen, die Möbelkanten schonenden Material besteht und der mit einem Keilgriff (31) und mit einer Keilbefestigung (32) versehen ist, wobei der Unterschiebekeil (30) mit dem Keilgriff (31) in eine Bohrung der Rollenhalterung (12) eingesteckt und unverlierbar fixiert ist und die Keilbefestigung (32) in der Form eines dünnen Seiles, in eine dafür unterhalb des Unterschiebekeil (30) angebrachte Bohrung (33) eingelegt wird.

Eine kostengünstigere Variante zur Hebevorrichtung mit Lauffrolle wird durch die Skizze nach Fig. 8 dargestellt. Hierbei entfallen die Hubantriebselemente, so der Windenantrieb mit der Kurbel (2), der Kraftübertrager (50), sowie die Rollenarmaturen (10,11) am Antriebsrohr (26). Alle anderen Merkmale sind die gleichen wie nach den Skizzen zu Fig. 1, 2 und 3 beschrieben. Das Antriebsrohr (26) ist bei dieser Variante nach Fig. 8, mit einer Führung (42) und einer Klemmvorrichtung (41) versehen, womit das Antriebsrohr (26) mit dem daran befestigten Lasttragteil, am Holm (1) höhenverschoben und arretiert werden kann.

Bei dieser Varianten nach Fig. 8 kommt das baugleiche Lasttragteil wie nach Fig. 4,5 und 6 beschrieben zum Einsatz. Diese Variante kann genauso flexibel am Transportgut befestigt werden wie die Hebevorrichtung nach Fig. 1, wobei das Anheben zum Unterschieben des Lasttragteils entweder von Hand oder mit einer Hebevorrichtung erfolgen muß.

Eine weitere Variante zur Hebevorrichtung mit Laufrolle wird mit der Skizze zu Fig. 9 dargestellt. Hierbei geht es um die Ausführung des Leerhubes zwischen dem Boden und dem Ansetzpunkt des Lasttrageteils am Transportgut. Während der Lasthub je nach Bodenbeschaffenheit nur wenige Millimeter beträgt, ist dies beim Leerhub ein vielfaches. In der beschriebenen Hebevorrichtung nach Fig. 1, 2u. 3 wird der gesamte Hub mittels Windenantrieb verstellt. Die Leer- und Lasthubverstellung wird bei dieser Varianten nach Fig. 9 dadurch gelöst, daß ein Führungsrohr (43) mit den Rollenarmaturen (10,11) versehen ist und mittels Kraftübertrager (50) mit der Winde (5) verbunden ist und über die Kurbel (2) angehoben und gesenkt werden kann, wobei das mit dem Lasttrageteil verbundene Antriebsrohr (26) mittels einer Klemmführung (44) höhenverschieblich und klemmbar an dem Führungsrohr (43) befestigt ist und so mit dem Führungsrohr (43) angehoben und gesenkt werden kann. Somit kann der Leerhub durch Verschieben des Lastragteil am Führungsrohr (43) mittels der Klemmführung (44) eingestellt werden und der Lasthub mit dem Windenantrieb erfolgen.

Eine weitere Leerhubverstellung und wird durch die Skizze nach Fig. 10 dargestellt. Hierbei ist die Laufrolle (13) unter einer Rollenstütze (45) befestigt und wird mittels einer Stützenführung (46) und einer Klemmung (47) höhenverschieblich und arretierbar am Holm (1) befestigt, so daß sich der Leerhub durch das Anheben der Hebevorrichtung und dem Absenken der Rollenstütze (45) ausführen läßt. Wenn das angehobene Lasttragteil den Möbelboden berührt, wird die Rollenstütze (45) mit der Klemmung (47) gesichert und der Lasthub wird dann mittels Windenantrieb ausgeführt.

Die Skizzen nach Fig. 11 und 12 stellen den Einbau der Rollenarmaturen (10,11) im Holm (1) dar, wobei die mit den Doppelrollen der Rollenarmaturen (10,11) bestückten Rollenträger (48, 49) durch den Führungsschlitz (29) des Holms (1) reichen und mit dem Antriebsrohr (26) verbunden sind.

Bei bestimmten Möbelbauformen kann es von Vorteil sein, den Möbelkörper mit Hilfe von Eckentragteilen, die an den Möbelecken angesetzt werden und die mittels eines den Möbelkörper umschließenden Zurrbandes (34) mit Spannverschluß auf die Möbelecken gepreßt werden, zu packen, um eine Hebevorrichtung mit Laufrolle daran zu befestigen.

Die Eckentragteile bestehen aus einem Winkelstück (35), das mit einem U-Profil (36), verbunden ist und das U- Profil mit T- förmig gestalteten Doppelhaken (37) versehen ist, wobei die Innenseite des Winkelstückes (35) mit einer über die äußeren Kanten reichenden Polsterung (39), sowie mit einer saugnapfartigen Haftauflage (40) zum rutschfesten Sichern der Eckentragteile an Möbelecken ausgestattet ist.

Das Eckentragteil ist zur Vermeidung von Bedienfehlern symetrisch gestaltet, wobei die Doppelhaken (37) sowohl als Führung für das das Möbelstück umschließende Zurrband (34), als auch zur Aufnahme der an der Hebevorrichtung mit Laufrolle eingelassenen Doppelschlitze (38, 52 u. 67) vorgesehen sind.

Vor dem Einsatz der Eckentragteile wird das gabelförmige Lastragteil von der Hebevorrichtung getrennt, indem der Bolzen (20) an der Aufhängung (21) gelöst wird, so daß zur Lastaufnahme mittels Eckentragteil am Antriebsrohr (26) der Doppelschlitz (38) zur Verfügung steht.

Das Anbringen der unteren Eckentragteile sollte zuerst erfolgen und kann erleichtert werden, indem die Eckentragteile vorläufig mit einem Klebeband an der Möbelecke angehängt werden, damit dann alle Eckentragteile auf einmal mit dem Zurrband (34) umschlungen und mittels Spannverschluß gespannt, auf die Möbelecken gedrückt werden können, so daß dann die Hebevorrichtungen mittels Doppelschlitz (38) eingesetzt und mit dem Hubantrieb leicht angespannt werden können.

In die so fixierten Hebevorrichtungen können die oberen Eckentragteile in die Doppelschlitze (52) am Klemmarm (7) eingesetzt werden, wobei dieser Klemmarm (7) vorher nach unten geklappt und in eine etwa parallele Lage zum Holm (1) gebracht und arretiert wird, wodurch das obere Eckentragteil am Holm (1) höhenverschieblich wird und mittels Klemmvorrichtung (6) in der gewählten Andrückhöhe fixiert werden kann, wonach ein Umschluß der Eckentragteile mittels eines Zurrbands mit Spannverschluß erfolgt.

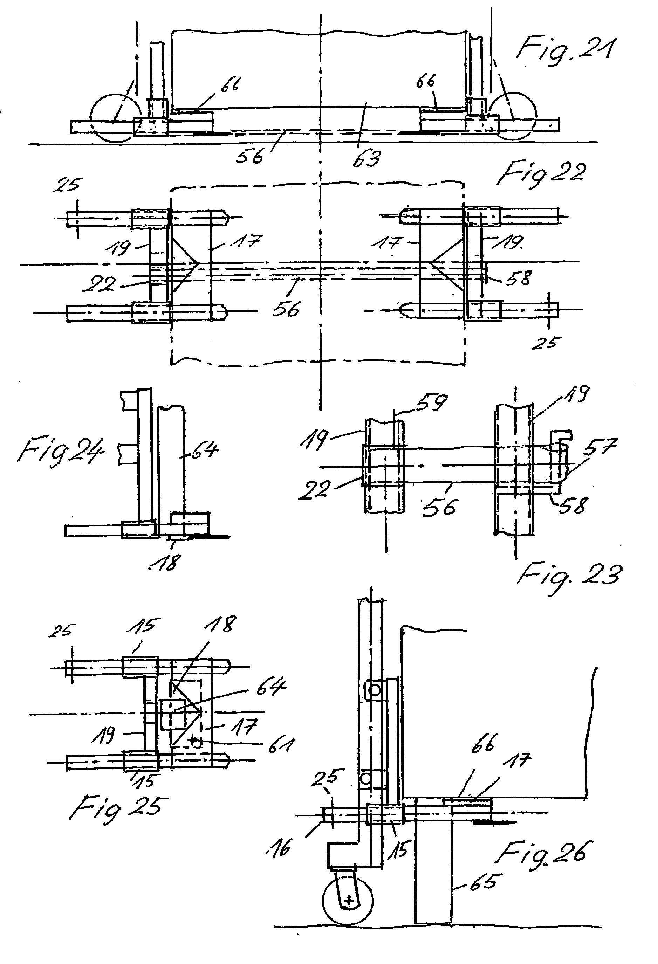

Zum Befestigen der Hebevorrichtung an Möbelstücken, deren Unterboden eine ebene, auf dem Boden aufstehende Fläche bildet, wodurch das Hintergreifen von Möbelteilen mittels der an dem Lasthebeteil angebrachten Vorrichtungen nicht möglich ist, wurde die Auflagefläche des Verbindungsteils (17) mit einem rutschfesten Belag (66) ausgestattet, um das Lasttragteil über die Reibung zwischen Möbelboden und Lasttragteil zu fixieren. Beim Rollen auf unebenen Böden kann es notwendig werden, die Hebevorrichtung zusätzlich zu sichern. In den Beispielen nach Fig. 21, 22 u. 23, wird die Befestigung von zwei an gegenüberliegenden Seiten des Transportgutes angesetzten Hebevorrichtungen gezeigt, die mit Hilfe eines Unterzugbandes (56) miteinander verbunden sind und so mit dem Möbelstück sicher fixiert werden. Dazu ist eine, mit einem selbsttätig aufrollbaren Unterzugband (56) und mit der Bandrollenarretiertung (59) versehenen Bandrolle (22) auf der Traverse (19) befestigt, wobei das mit einer Bandöse (57) versehene Unterzugband (56) unter den Verbindungsteilen (17) der gabelförmigen Lasthebeteile hindurch geführt wird und die Bandöse (57) in den an der Traverse (19) der gegenüberliegenden Vorrichtung angebrachten Haken (58) eingehängt ist. Die Bandrolle (22) mit dem selbsttätig aufgerollten und angespannten Unterzugband (56) wird mit der Bandrollenarretierung (59) fixiert.

Das gabelförmige Lasttrageteil ist für weitere Anwendungsformen ausgestattet. Dazu zeigen die Abbildungen der Figuren 24 und 25 die Aufnahme an langen Möbelbeinen, wie z. B. an Tischen oder Klavieren, wobei das Möbelbein (64) auf die, unterhalb des mit einem V-förmigen Ausschnitt versehenen Verbindungsteil (17) schwenkbar angebrachte Aufstellfläche (18) aufgesetzt wird und zwischen der Traverse (19) und dem V- förmigen Einschnitt des Verbindungsteil (17) eingeklemmt und damit gegen Verrutschen gesichert wird.

Eine weitere Befestigungsart des Lasttragteil an einem Möbelstück wird durch die Skizze nach Fig. 26 darstellt, wobei das Lasttragteil einen Möbelfuß (65) hintergreift. Dazu wird der gabelartige Einsatz des Lasttragteil nach dem Lösen der Auszugsicherung (25) aus der Lastgabelführung (15) entnommen, und unter dem Möbelboden geführt und nach außen geschoben, bis der Möbelfuß (65) in dem V- förmigen Einschnitt eingeschlossen ist. Es folgt das Einsetzen der Lastgabelteile (16) in die Lastgabelführungen (15) und das Anheben des Lasttragteils mittels der Hubmechnik, wodurch das Lasttragteil über die Verzahnungsauflagen (23,24) mit der Hebevorrichtung fixiert wird.

### Anwendung

Die Hebevorrichtung für Laufrollen kann je nach Bauform, Stellposition oder Schwerpunkt der Transportgüter frei positioniert werden, wobei normalerweise je nach Formgestaltung und

Gewicht des Transportgutes zwei, drei oder vier Hebevorrichtungen mit Laufrolle zum Einsatz kommen. So genügen z.B. zum Verfahren von Betten, zwei beidseitig und mittig an einem Bett angebrachte Vorrichtungen, wobei das Auswiegen und Rollen dann wie mit einem zweirädrigen Wagen erfolgt. Polstermöbel, die eckförmig gestaltet sind, werden üblicherweise mit drei Vorrichtungen, und schrankartige Möbelformen mit vier angesetzten Vorrichtungen verfahren.

Vor dem Ansetzen und fixieren der Hebevorrichtung mit Laufrolle am Transportgut wird vorher das Lasttragteil passend zum Möbelboden eingestellt, dann untergeschoben und die Hubmechanik betätigt. Wenn die Bodenfreiheit des Transportgutes nicht ausreicht, werden die beiden Zungen (15) vom Lasttragteil unter das Transportgut geschoben, angehoben und der Unterschiebekeil (30) eingesteckt. Dann wird das Lastragteil abgesenkt und bis zur Traverse (19) als Anschlag unter das Transportgut geschoben und das Transportgut auf Transporthöhe gebracht.

Vor dem Anheben des Transportgutes durch Betätigung der Kurbel (2) wird die Klemmvorrichtung (6) gelöst und der Klemmarm (7) auf das Transportgut abgesetzt und nach dem Anheben des Transportgutes auf Transporthöhe arretiert und dann mittels der Kurbel (2) durch einen zusätzlichen, geringen Hubweg, schraubzwingenartig auf das Transportgut gepreßt.

Zur Entnahme der Hebevorrichtung mit Laufrolle wird die Kurbel (2) zur Entspannung der Rücklaufsperre betätigt, die Rücklaufsperre (54) mittels Entriegelung (55) gelöst und das Transportgut abgelassen.

Nachfolgend wird die Ausgestaltung der Hebevorrichtung mit Laufrolle mit einem Spindelantrieb beschrieben. Hierbei wird eine innerhalb des Holms (1) gelagerte Spindel (68) mittels einer Ratsche (69) und einer Kurbel (72), die auf dem Kopf des Holms (1) aufgesetzt sind, angetrieben. Die Kurbel (72) mit dem Kurbelgriff (73) ist über das Gelenk (70) mit der Ratsche (69) verbunden und wird in ihrer aufgeklappten Stellung von dem Anschlag (71) und in der eingeklappten Stellung vom Holm (1) begrenzt. Der Antrieb der Spindel ist auch über ein Winkelgetriebe möglich, was aber bei der beschrieben Hebevorrichtung mit Laufrolle aufgrund der Leerhubverstellung und der kurzen Lasthübe nicht erforderlich ist. Der Einbau einer Ratsche ist in jedem Falle aufgrund der Einsätze der Hebevorrichtung in räumlich eng begrenzter Umgebung notwendig.

Die Spindel (68) ist an ihrer oberen Seite mit der Ratsche (69) gekoppelt, und die Ratsche (69) ist so gestaltet, daß sie die Lastkräfte voll aufnehmen kann. Das untere Teil der Spindel (68) ist in die im Oberteil des Spindelrohres (76) befestigte Spindelmutter (74) eingedreht und mit dem Bolzen (90) gegen Auszug aus der Spindelmutter (74) gesichert. Zur Kontrolle der Lasthubstellung ist über dem gesamten Verschiebebereich der Spindelmutter (74), auf der Seite der Laufrolle (13), gleich unterhalb der Ratsche (69), ein Schlitz als Kontrollfenster (75) in die Wandung des Holm (1) eingelassen.

Das Hubrohr (79) wird innerhalb des Holms (1) mit den Rollenarmaturen (77 und 86) geführt, ist an seinem oberen Ende mittels des Rollenträgers (78) mit dem Spindelrohr (76) kardanisch verbunden und über den gesamten Bereich auf der Lastseite mit einer Verzahnung (80) versehen. Das Antriebsrohr (26) ist durch den Führungsschlitz (29) des Holms (1) hindurch mit den das Hubrohr umschließenden Führungen (81, 82) verbunden, wobei die untere Führung (82) mit einer Verzahnung zum Eingreifen in die Verzahnung (80) des Hubrohres ausgestattet ist.

Der Leerhubhebel (84) ist über die Achse (83) mit der Druckrolle (85) verbunden und wird am Holm (1) vorbei zur Bedienseite geführt (Figur 27)

Zur Verstellung des Leerhubes wird die Verzahnung zwischen dem Hubrohr (79) und der Führung (82) gelöst, indem der Leerhubhebel (84) angehoben wird, wodurch die Druckrolle (85) durch den Führungsschlitz (29) hindurch auf das Hubrohr (79) gedrückt wird und die mit einem ausreichenden Spiel versehenen Führung (82) aus der Verzahnung mit dem Hubrohr (79) zieht. Das Antriebsrohr (26) mit der Lastgabel kann über den gesamten Bereich des Hubrohrs (79) verschoben werden und rastet beim Loslassen des Leerhubhebels (84) in die Verzahnung ein.

Die Lastgabel ist mit einem Gelenk (88) und mit einem Anschlag (89) versehen und kann damit wie auch die Kurbel (72) platzsparend eingeklappt werden.

## Patentansprüche

1. Hebevorrichtung mit Laufrolle, bestehend aus einem mit Anbauteilen versehenen Holm, der an seinem Unterteil mit einem Lasttragteil und an seiner Oberseite mit einem Bedienelement versehen ist, **dadurch gekennzeichnet, daß** der Holm (1) mit einer Hubmechanik zum Anheben und Absenken des Lasttragteils ausgestattet ist, daß am Unterteil des Holms (1), auf der dem Lasttragteil gegenüberliegenden Seite, eine Laufrolle (13) angebracht ist und daß der Holm (1) mit einem höhenverschieblichen, winkelverstellbaren und arretierbaren Klemmarm (7) ausgestattet ist.

2. Hebevorrichtung mit Laufrolle nach Anspruch 1, **dadurch gekennzeichnet, daß** die Hubmechanik mit einem Windenantrieb ausgeführt wurde, bestehend aus einer innerhalb des Holms (1) gelagerten Welle, die als Winde (5) zum Aufrollen des Kraftübertragers (50) vorgesehen ist und daß der Kraftübertrager (50) mittels Verbindungsöse (27) und Rollenträger (48, 49) mit einem Antriebsrohr (26) verbunden ist und daß die Winde (5) mit einem Klinkenrad (53), mit einer Rücklaufsperre (54) und einer Entriegelung (55) versehen ist und daß die Winde (5) mit einer Kurbel (2) und daß die Kurbel (2) mit einem äußeren Kurbelgriff (3) und einem inneren Kurbelgriff (4) ausgestattet ist.

3. Hebevorrichtung mit Laufrolle nach Anspruch 1, **dadurch gekennzeichnet, daß** der Klemmarm (7) an seiner Unterseite mit einem Querarm (8) und mit einer Polsterauflage (9) und mit einem Doppelschlitz (67) ausgestattet ist und an seiner Oberseite mit einem weiteren Doppelschlitz (52) versehen ist und daß der Klemmarm (7) an der am Holm (1) höhenverschieblich und klemmbar gestalteten Klemmvorrichtung (6) schwenkbar befestigt ist und mittels eines selbstsichernden Steckbolzens auf verschiedenen Winkelstellungen arretiert werden kann und daß die Doppelschlitze (52,67) zur Aufnahme von Eckentragteilen vorgesehen sind.

4. Hebevorrichtung mit Laufrolle nach Anspruch 2, **dadurch gekennzeichnet, daß** das Lasttragteil aus einer Traverse (19), die beidseitig mit Lastgabelführungen (15) versehen ist, besteht und daß die Traverse (19) mittels einer Aufhängung (21) und mit einem quer zur Traverse (19) angeordneten, lösbaren Bolzen (20) mit dem Antriebsrohr (26) verbunden ist und daß die als Rechteckrohr gestaltete Aufhängung (21), quer zum Bolzen (20), zum Erzielen eines Pendelweges erweitert ist und daß an der Traverse (19) eine Bandrolle (22) und ein Bandbefestigungshaken (58) angebracht sind.

5. Hebevorrichtung mit Laufrolle nach Anspruch 4, **dadurch gekennzeichnet, daß** von den Lastgabelführungen (15) je ein Lastgabelteil (16) geführt wird und daß sowohl die Lastgabelführungen (15), als auch die Lastgabelteile (16) mit Verzahnungsauflagen (23,24) versehen sind und daß die Lastgabelteile (16) auf der der Laufrolle abgewandten Seite mit einem Zungenpaar (14) zum Unterfassen von Transportgütern ausgestattet sind und daß die Lastgabelteile (16) im Bereich des Zungenpaares (14) mit dem Verbindungsteil (17) verbunden sind und daß das Verbindungsteil (17) mit einem zur Traverse (19) hin geöffneten V- förmigen Einschnitt versehen ist und daß unterhalb des Verbindungsteils (17) eine Aufstellfäche (18) angebracht ist und daß eines der Lastgabelteile (16) auf der Seite zur Laufrolle (13) hin mit einer lösbaren Auszugsicherung (25) versehen ist.

6. Hebevorrichtung mit Laufrolle nach Anspruch 1, **dadurch gekennzeichnet, daß** auf der, dem Lasttragteil abgewandten Seite am unteren Ende des Holms (1) eine Rollenhalterung (12) zur Befestigung der als Lenkrolle gestalteten Laufrolle (13) vorgesehen ist und daß die Rollenhalterung (12) als Ablage für einen mittels Keilgriff (31) fixierten Unterschiebekeil (30) dient und daß der Unterschiebkeil (30) unverlierbar mit dem Rollenhalter (12) verbunden ist.

7. Hebevorrichtung mit Laufrolle nach Anspruch 1, **dadurch gekennzeichnet, daß** die Lastaufnahme anstatt mit dem Lasttragteil, mit Eckentragteilen vorgesehen ist, daß die Eckentragteile aus einem Winkelstück (35) bestehen, das mit einem U- Profil (36) und mit Doppelhaken (37) und mit einer Polsterung (39) sowie mit einer Hafhuflage (40) versehen sind und daß die Eckenteile mittels Doppelhaken (37) sowohl in Doppelschlitze (38) am Antriebsrohr (26), als auch in Doppelschlitze (52,67) am Klemmarm (7) eingesetzt werden können und daß die Eckentragteile mittels eines zwischen den Doppelhaken (37) geführten Zurrbandes (34) auf die Ecken eines Transportgutes gepreßt werden.

8. Hebevorrichtung mit Laufrolle nach Anspruch 1, **dadurch gekennzeichnet, daß** das Lasttragteil gabelförmig gestaltet ist und daß die Lastgabelteile (16) mit einem Verbindungsteil (17) verbunden sind.

9. Hebevorrichtung mit Laufrolle nach Anspruch 1, **dadurch gekennzeichnet, daß** die Hubantriebselemente entfallen können und daß ein Antriebsrohr (26) mit einer Führung (42) und mit einer Klemmvorrichtung (41) versehen ist, womit das Antriebsrohr (26) mit dem daran befestigten Lasttragteil am Holm (1) in der Höhe verschoben und arretiert werden kann.

10. Hebevorrichtung mit Laufrolle nach Anspruch 8, **dadurch gekennzeichnet, daß** das gabelförmige Lasttragteil von der Hebevorrichtung getrennt werden kann, indem der Bolzen (20) an der Aufhängung (21) gelöst wird, und daß zur Lastaufnahme ein Eckentragteil am Antriebsrohr befestigt werden kann.

## Claims

1. Lifting device with roller, consisting of a pole with attachments provided with a load-bearing element on its lower section and an operating element on its upper section and **characterised by** the fact that the pole (1) is equipped with a hoisting mechanism for lifting and lowering the load-bearing element, that the lower section of the pole (1) on the side opposite to the load-bearing element has a roller (13) and that the pole (1) is equipped with a height-adjustable, angle-adjustable and lockable clamping arm (7).

2. Lifting device with roller in accordance with Claim 1 and **characterised by** the fact that the hoisting mechanism has a winch drive consisting of a shaft within the pole (1) which is provided as a winch (5) to roll up the power transmission (50) and that the power transmission (50) is connected to a drive tube (26) by means of a connecting eye (27) and roller housings (48, 49) and that the winch (5) is provided with a pawl (53) and clip (54) and a release latch (55) and that the winch (5) is equipped with a crank (2) and that the crank (2) has an external crank handle (3) and an internal crank handle (4).

3. Lifting device with roller in accordance with Claim 1, **characterised by** the fact that the clamping arm (7) has a cross arm (8) and a cushion (9) and a double slot (67) at the bottom and a further double slot (52) at the top and that the clamping arm (7) is hinged with the height-adjustable and lockable clamping device (6) on the pole (1) and can be locked with the aid of a self-locking socket pin at different angles and that the double slots (52, 67) are provided to hold corner bearing elements.

4. Lifting device with roller in accordance with Claim 2 and **characterised by** the fact that the fork-type load-bearing element consists of a cross bar (19) provided with forklift guides (15) on both sides and that the cross bar (19) is connected with the drive tube (26) by means of a suspension with a detachable pin arranged perpendicularly to the cross bar (19) and that the suspension (21) executed as a square-section tube is extended perpendicularly to the pin (20) to achieve an oscillation and that a belt roller (22) and a belt fastening hook (58) are attached to the crossbar (19).

5. Lifting device with roller in accordance with Claim 4 and **characterised by** the fact that the forklift guides (15) each carry a forklift element (16) and that both the forklift guides (15) as well as the forklift elements (16) have gearings (23,24) and that the forklift elements (16) are equipped with a pair of tongues (14) on the side opposite to the roller to hold transport goods from below and that the forklift elements (16) are connected by the connection element (17) in the area of the pair of tongues (14) and that the connection element (17) is provided with a v-shaped cutout opened towards the crossbar (19) and that underneath the connection element (17) a bearing surface (18) is provided and that one of the forklift elements (16) are provided with a releasable pull-out lock (25) on the side facing the roller (13).

6. Lifting device with roller in accordance with Claim 1 and **characterised by** the fact that a roller bracket (12) is provided on the lower end of the pole (1) on the side turned away from the load bearing element with a roller bracket (12) to fasten the roller (13) executed as a guide roller and that the roller bracket (12) serves as a support for a wedge (30) fixed by a wedge grip (31) and that the wedge (30) is connected with the roller bracket (12) in such a way that it cannot get lost.

7. Lifting device with roller in accordance with Claim 1 and **characterised by** the fact that the load take-up is provided with corner bearing elements instead of the load bearing element, that the corner bearing elements consist of an angle piece (35) that is provided with a U-profile (36), double hooks (37), a cushion (39) and with an adhesive surface (40) and that the corner elements can be inserted with the aid of the double hooks (37) both in the double slots (38) on the drive tube (26) and in the double slots (52, 67) on the clamping arm (7) and that the corner bearing elements are pressed onto the corners of the goods to be transported with the aid of a lashing strap (34) between the double hooks (37).

8. Lifting device with roller in accordance with Claim 1 and **characterised by** the fact that the load-bearing element is in the form of a fork and that the forklift elements (16) are connected by means of a connection element (17).

9. Lifting device with roller in accordance with Claim 1 and **characterised by** the fact that the lift drive elements can be omitted and that a drive tube (26) is provided with a guide (42) and a clamping device (41) with which the drive tube (26) with the load-bearing element fastened to it can be raised on the pole (1) and held in position.

10. Lifting device with roller in accordance with Claim 8 and **characterised by** the fact that the fork-shaped load-bearing element can be separated from the lifting device by releasing the pin (20) at the suspension (21) and that a corner bearing element can be fixed to the drive tube to accommodate a load.

## Revendications

1. Dispositif de levage comportant un galet de roulement, consistant en un montant pourvu de pièces rapportées, qui est pourvu dans sa partie inférieure d'une pièce porte-charge et en son côté supérieur d'un élément de commande, **caractérisé en ce que** le montant (1) est équipé d'un mécanisme de levage pour relever et abaisser la pièce porte-charge, qu'à la partie inférieure du montant (1), sur le côté opposé à la pièce porte-charge, un galet de roulement (13) est fixé et que le montant (1) est équipé d'un bras de serrage (7) pouvant être déplacé en hauteur et angle et pouvant être arrêté.

2. Dispositif de levage comportant un galet de roulement selon la revendication 1, **caractérisé en ce que** le mécanisme de levage a été exécuté avec un entraînement à treuil consistant en un arbre logé à l'intérieur du montant (1), qui est prévu comme treuil (5) pour enrouler le dispositif de transmission de la force (50) et que le dispositif de transmission de la force (50) est relié moyennant un oeillet de raccordement (27) et un porte galet (48, 49) à un tuyau d'entraînement (26) et que le treuil (5) est pourvu d'une roue à cliquet (53), d'un blocage d'inversion (54) et d'un déverrouillage (55) et que le treuil (5) est équipé d'une manivelle (2) et que la manivelle (2) est équipée d'une poignée de manivelle extérieure (3) et d'une poignée de manivelle intérieure (4).

3. Dispositif de levage comportant un galet de roulement selon la revendication 1, **caractérisé en ce que** le bras de serrage (7) est pourvu en son côté inférieur d'un bras transversal (8) et d'un appui rembourré (9) et d'une double fente (67) et en son côté supérieur d'une double fente (52) supplémentaire et que le bras de serrage (7) est fixé de manière à pouvoir pivoter au dispositif de serrage (6), configuré pour pouvoir être déplacé en hauteur et serré sur le montant (1), et peut être arrêté en différentes positions angulaires au moyen d'un axe embrochable autobloquant et que les doubles fentes (52, 67) sont prévues pour recevoir des pièces porteuses en coin.

4. Dispositif de levage comportant un galet de roulement selon la revendication 2, **caractérisé en ce que** la pièce porte-charge à la manière d'une fourche consiste en une traverse (19) qui est pourvue des deux côtés de guidages de fourche porte-charge (15) et que la traverse (19) est reliée au moyen d'une suspension (21) et d'un axe (20) desserrable disposé transversalement par rapport à la traverse (19) au tuyau d'entraînement et que la suspension (21) configurée comme tuyau rectangulaire est élargie transversalement par rapport à l'axe (20) pour obtenir un mouvement pendulaire et qu'un galet de renvoi (22) et un crochet de fixation de la bande (58) sont logés sur la traverse (19).

5. Dispositif de levage comportant un galet de roulement selon la revendication 4, **caractérisé en ce que** les guidages de fourche porte-charge (15) guident chacun un élément de fourche porte-charge (16) et que, tant les guidages de fourche porte-charge (15) que les éléments de fourche porte-charge (16) sont pourvus de supports d'engrenage (23, 24) et que les éléments de fourche porte-charge (16) sont équipés du côté détourné du galet de roulement d'une paire de languettes (14) pour saisir d'en dessous des biens de transport et que les éléments de fourche porte-charge (16) dans la zone de la paire de languettes (14) sont reliés à la pièce de raccordement (17) et que la pièce de raccordement (17) est pourvue d'une entaille en forme de V ouvert en direction de la traverse (19) et qu'en dessous de la pièce de raccordement (17) est prévue une surface de dépôt (18) et qu'un des éléments de fourche porte-charge (16) est pourvu d'un blocage anti-extraction (25) desserrable du côté dirigé vers le galet de roulement (13).

6. Dispositif de levage comportant un galet de roulement selon la revendication 1, **caractérisé en ce que** du côté détourné de la pièce porte-charge à l'extrémité inférieure du montant (1) une fixation de galet (12) pour fixer le galet de roulement (13) formé comme poulie est prévue et que la fixation de galet (12) sert d'appui pour un coin à glisser en-dessous (30) fixé au moyen d'une poignée de coin (31) et que le coin à glisser en-dessous (30) est relié de manière à ne pas se perdre à la fixation de galet (12).

7. Dispositif de levage comportant un galet de roulement selon la revendication 1, **caractérisé en ce que** l'appui de charges est équipé à la place de la pièce porte-charge de pièces porte-charge en coin, que les pièces porte-charge en coin consistent en une pièce angulaire (35) qui est pourvue d'un profilé en U (36) et de doubles crochets (37) ainsi que d'un rembourrage (39) et d'une surface adhérente (40) et que les pièces angulaires peuvent être placées moyennant de doubles crochets (37) aussi bien dans des doubles fentes (38) sur le tuyau d'entraînement (26) que dans de doubles fentes (52, 67) dans le bras de serrage (7) et que les pièces porte-charge en coin peuvent être pressées moyennant une sangle d'arrimage (34) guidée entre les doubles crochets (37) sur les coins d'une marchandise à transporter.

8. Dispositif de levage comportant un galet de roulement selon la revendication 1, **caractérisé en ce que** la pièce porte-charge est configurée en forme de fourche et que les éléments de fourche porte-charge (16) sont reliés à une pièce de raccordement (17).

9. Dispositif de levage comportant un galet de roulement selon la revendication 1, **caractérisé en ce que** les éléments d'entraînement de levage peuvent être supprimés et qu'un tuyau d'entraînement (26) est pourvu d'un guidage (42) et d'un dispositif de serrage (41) moyennant lesquels le tuyau d'entraînement (26) peut être déplacé en hauteur et arrêté au montant (1) avec la pièce porte-charge fixée à lui.

10. Dispositif de levage comportant un galet de roulement selon la revendication 8, **caractérisé en ce que** la pièce porte-charge en forme de fourche peut être séparée du dispositif de levage en desserrant l'axe (20) de la suspension et que pour recevoir une charge une pièce porte-charge en coin peut être fixée au tuyau d'entraînement.
